# EUROPÄISCHE PATENTANMELDUNG

(11) **EP 3 744 414 A1**
(43) Veröffentlichungstag der Anmeldung: **02.12.2020**
(21) Anmeldenummer: 19177260.7
(22) Anmeldetag: 29.05.2019
(51) Int. Cl.: B01D 46/00, B01D 46/10, B01D 46/52

(54) **FILTER MIT UMGEFALTETEM KANTENBAND**

(71) Anmelder: Carl Freudenberg KG, 69469 Weinheim (DE)
(72) Erfinder: Häfner, Uwe, 77964 Kehl (DE); Blauth, Sascha, 67688 Rodenbach (DE); Uhlarikova, Dana, 91633 Hrádok (SK)

(57) **Zusammenfassung**

Die Erfindung betrifft einen Filter (100) zur Filtration eines Fluidstroms (L), aufweisend einen Rahmen (9) und ein im Rahmen (9) aufgenommenes Filterelement 10), wobei das Filterelement (10) ein einen Faltenbalg (1) bildendes mit Falten (7) versehenes Filtermedium aufweist, und der Faltenbalg (1) mit mindestens einem Kantenband (2) versehen ist.

Aufgabe der vorliegenden Erfindung ist es, einen Filter zu schaffen, welcher geringen Materialaufwand, gute Fertigungseigenschaften und eine hohe Dichtheit miteinander verbindet
Erfindungsgemäß wurde als vorteilhaft erkannt, die Aufgabe durch eine spezielle Ausgestaltung des Kantenbandes zu lösen: das Kantenband (2) ist aus komprimierbarem Material und besitzt eine Höhe (h_{K}), die größer als die Höhe (h_{F}) des Faltenbalgs (1) ist und ist, in dem Bereich, in dem es über die Höhe (h_{F}) des Faltenbalgs (1) hinausgeht, an einer Faltkante (3) des Kantenbandes (2) umgefaltet und damit teilweise zweilagig.

## Beschreibung

Die Erfindung betrifft einen Filter gemäß dem Oberbegriff von Anspruch 1.

### Stand der Technik

Aus dem Stand der Technik sind zahlreiche Lösungen zur Fitration von Fluidströmen bekannt. Häufig kommen dabei plissierte Filtermedien zum Einsatz. Die EP 3 332 858 A1 zeigt ein Filterelement mit einem mit Falten versehenes Filtermedium, welches also plissiert ist, und einen Faltenbalg bildendet. An seinen seitlichen Flächen ist der Faltenbalg mit einem Kantenband versehen. Das Filterlement kann in einen Rahmen eingesetzt werden, welcher häufig aus Kunststoff hergestellt ist, um eine sichere kraft- bzw. reibschlüssige Abdichtung zwischen Filterelement und Rahmen zu gewährleisten. Zur Absicherung der Integrität dieses Zusammenbaus bei statischen oder dynamischen Beanspruchungen können beide stoffschlüssig miteinander verbunden sein, in der Regel verklebt werden oder durch Verrastung formschlüssig miteinander verbunden werden.

Um ausreichend Dichtmasse verwenden zu können, kann eine Anpassung der Ausformung des Rahmens erforderlich sein. Dies stellt einen ungewünschten Aufwand dar. Auch muss das Filerelement mit einer hohen Verpressung in dem Rahmen montiert werden, sodass trotz eventueller fertigungsbedingter Formabweichungen eine ausreichende Dichtheit gewährleistet wird. Problematisch dabei ist, dass es auf Grund der hohen Verpressung leicht zu einer Deformierung des Faltenbalgs und damit zu einer reduzierten Filtereffizienz kommen kann.

### Aufgabenstellung

Aufgabe der vorliegenden Erfindung ist es, einen Filter zu schaffen, welcher geringen Materialaufwand, gute Fertigungseigenschaften und eine hohe Dichtheit miteinander verbindet und die Nachteile des Standes der Technik zumindest teilweise behebt.

### Technische Lösung

Gelöst wird diese Aufgabe durch einen Filter mit den Merkmalen von Anspruch 1. Erfindungsgemäß wurde als vorteilhaft erkannt, die Aufgabe durch eine spezielle Ausgestaltung des Kantenbandes zu lösen.

Der erfindungsgemäße Filter dient der Filtration eines Fluidstromes und besitzt einen Rahmen und ein im Rahmen aufgenommenes Filterelement. Unter Rahmen wird nachfolgend auch ein Gehäuse verstanden. Das Filterelement weist ein einen Faltenbalg bildendes, mit Falten versehenes, insbesondere plissiertes Filtermedium auf. Der Faltenbalg ist, zumindest an seinen sich nicht in Richtung der Falten erstreckenden Seitenflächen, mit mindestens einem Kantenband versehen. Alternative Begriffe für "Kantenband" sind auch "Seitenstreifen" oder "Kantenstreifen". Das Kantenband ist ein Band bzw. Streifen aus einem flächigen Material.

Erfindungsgemäß ist das Kantenband aus komprimierbarem Material gefertigt, und das Material kann eine gute Kompressibilität, d.h. eine gute Zusammendrückbarkeit, aufweisen. Die Kompressibilität kann dabei bestimmt werden gemäß DIN 53885 - Bestimmung der Zusammendrückbarkeit von Textilien und textilen Erzeugnissen (weiter gültige Restnorm) in der Fassung von Dezember 1998. Gemäß dieser Norm erfolgt eine Angabe über die Kompressibilität als absolute Zusammendrückbarkeit Z_{AX}, nämlich als Differenz der Anfangs- und Enddicke (aₓ - a₁₀ₓ). Die hierbei zu verwendenden Geräte nach DIN EN ISO 9073-2 sollen eine Belastungsrichtung aufweisen, die so gestaltet ist, dass sie die Einstellung von Anfangsmessdrücken zwischen 0,2kPa und 2 kPa erlauben.

Für erfindungsmäßige einlagige Kantenstreifen aus Vliesstoff hat sich gezeigt, dass diese bei einem Anfangsmessdruck von 2 kPa eine absolute Zusammendrückbarkeit Z_{AX} als Differenz der Anfangs- und Enddicke (aₓ - a₁₀ₓ) von mindestens 0,3mm aufweisen. So ist gewährleistet, dass beispielsweise durch eine zweilagige Ausführung der Kantenbänder an sich gegenüberliegenden Seiten eines Filterelements fertigungsbedingte Formabweichungen der Parallelität dieser Seiten von über 1 mm ausgeglichen werden.

Insbesondere ist das Material aus Polyestervlies, beispielsweise aus einem Polyester-Stapelvlies, d.h. einem Polyestervlies aus Stapelfasern.

In besonders vorteilhafter Ausgestaltung besitzt das Kantenband eine Höhe, die größer ist als die Höhe des Faltenbalgs. In dem Bereich, in dem das Kantenband über die Höhe des Faltenbalgs hinausgeht, bzw. hinaussteht ist das Kantenband entlang einer Faltkante umgefaltet bzw. nach außen umgeklappt und damit teilweise zweilagig. D.h. der umgefaltete Abschnitt des Kantenbandes wird auf die Außenfläche des Kantenbandes abgelegt, sodass das Kantenband hier zweilagig ist. Besonders vorteilhaft ist es, wenn das Kantenband angrenzend an die stromabwärtige Seite des Faltenbalges zweilagig ausgeführt ist. D.h. auf der Reingassseite des Faltenbalgs ist das Kantenband zweilagig ausgeführt. Durch das Vorsehen einer zweilagigen Ausführung des Kantenbandes zwischen Faltenbalg und Rahmen können fertigungsbedingte Dimensionsabweichungen und Toleranzen besonders gut ausgeglichen werden. Auch kann so auf einfache Weise zwischen Faltenbalg und Rahmen ein Aufnahmevermögen für Dichtmassen geschaffen werden.

In vorteilhafter Weiterbildung des erfindungsgemäßen Filters ist die Höhe des Kantenbandes geringer als die doppelte Höhe des Faltenbalges. So ergibt sich eine gestufte Anordnung von zweilagigem und einlagigem Kantenband zwischen Faltenbalg und Rahmen. Besonders vorteilhaft erscheint es, wenn die Höhe des Kantenbandes in etwa dem 1,3-fachen bis 1,9-fachen der Höhe des Faltenbalgs entspricht.

In besonders vorteilhafter und daher bevorzugter Weiterbildung des erfindungsgemäßen Filters liegt das Kantenband an seiner einen Seitenfläche am Faltenbalg und an seiner anderen, äußeren Seitenfläche mit seinem umgefalteten Abschnitt flächig am Rahmen an. So kann bereits eine gute Abdichtung durch das Kantenband selbst erreicht werden.

Um das Kantenband am Faltenbalg zu befestigen, kann es auf diesen aufgeklebt sein. Dazu kann das Kantenband z.B. selbstklebend ausgeführt sein. Dies erlaubt eine besonders einfache Fertigung des erfindungsgemäßen Filters.

Weiter vorteilhaft ist es, wenn das Kantenband voluminös ausgeführt ist und insbesondere mindestens zwei Millimeter dick. Dadurch wird ein guter Ausgleich von Fertigungstoleranzen gewährleistet.

Es wurde als vorteilhaft erkannt, wenn das Kantenband ein hohes spezifisches Volumen aufweist. Das spezifische Volumen kann insbesondere im Bereich von 0,005 m³/kg bis 0,05 m³/kg liegen. Unter spezifischem Volumen wird hier das Verhältnis von Dicke des Kantenbandes zum Flächengewicht des Kantenbandes verstanden. Bei zunehmender Dicke des Kantenbandes und gleichbleibendem Flächengewicht des Kantenbandes ergibt sich somit ein "Volumenvorteil". Ein "Volumenvorteil" ergibt sich auch, bei gleichbleibender Dicke und sinkendem Flächengewicht. Ein solcher "Volumenvorteil" welcher durch die Struktur des Materials erreicht werden kann, beispielsweise der Struktur der Fasern und ihrer Positionierung zueinander, stellt auch ein Maß für die Kompressibilität des Materials dar.

In Weiterbildung des erfindungsgemäßen Filters ist das Kantenband an seiner Faltkante geschlitzt oder geritzt oder verjüngt ausgebildet, sodass an der Faltkante ein Filmscharnier ausgebildet wird und sich das Kantenband einfach falten bzw. umklappen lässt. Die Materialschwächung kann durch einen Laserstrahl erzeugt werden, beispielsweise wie in der EP 0 965 549 A2 beschrieben. Bei der Tiefe des Schlitzes, der Ritze oder der Verjüngung ist darauf geachtet, dass die beiden Faltabschnitte des Kantenbandes miteinander verbunden und das Kantenband einteilig bleibt. Gleichzeitig wird eine einfache Faltung ermöglicht und es bestehen nach erfolgter Faltung keine wesentlichen Rückstellkräfte.

In einer vorteilhaften Weiterbildung des erfindungsgemäßen Filters ist eine Dichtmasse, beispielsweise eine Vergussmasse, zur Abdichtung des Filterelements gegenüber dem Rahmen eingebracht, wobei sich diese Dichtmasse zumindest in dem Raum zwischen dem Rahmen und dem einlagigen Kantenband befindet. So kann in vorteilhafter Weise der gestufte Aufbau des Kantenbandes genutzt werden um ausreichend Dichtmasse verwenden zu können und eine sichere Abdichtung zu gewährleisten. Als Dichtmasse kann beispielsweise Polyurethan verwendet werden.

Durch die Dichtmasse kann auch eine stoffschlüssige Verbindung von Rahmen und Filterelement erfolgen. Alternativ oder auch zusätzlich kann eine Verbindung von dem Filterelement mit seinem Rahmen auch durch formschlüssige Elemente und Verrastung erfolgen. Dazu können beispielsweise Rastelemente wie Rastnasen vorgesehen sein. So wird eine einfache Montage ermöglicht, insbesondere auch für den Fall, dass das Filterelement lösbar in den Rahmen aufgenommen werden soll.

Besonders vorteilhaft ist es, wenn der Faltenbalg aus Vliesstoff gebildet wird, da Vliesstoff ein leichtes Material mit guten Filter- und Fertigungseigenschaften darstellt.

Der erfindungsgemäße Filter kann insbesondere als Innenraum-Luftfilter in Fahrzeugen, wie z.B. Autos, PKW, NKW, Zügen oder Schiffen verwendet werden.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: ein Filterelement gemäß dem Stand der Technik
- Fig. 2: einen erfindungsgemäßen Filter
- Fig. 3a: das Kantenband vor einer Faltung
- Fig. 3b: das Kantenband bei einer Faltung
- Fig. 4a: eine Variante des erfindungsgemäßen Filters
- Fig. 4b: eine weitere Variante des erfindungsgemäßen Filters
- Fig. 5: eine weitere Variante des erfindungsgemäßen Filters mit Rastmechanismus

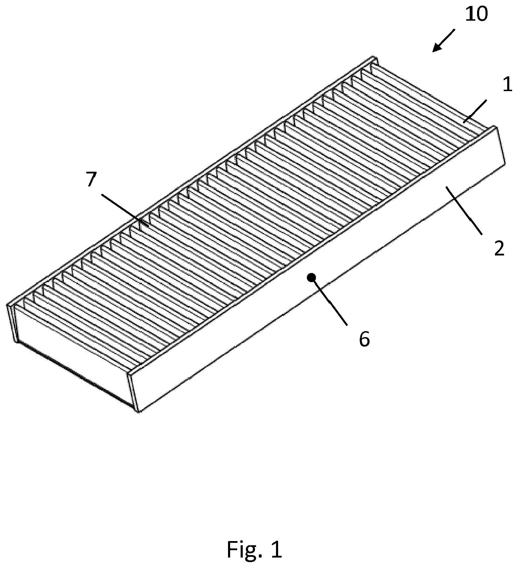

Fig. 1 zeigt ein Filterelement 10 mit einem Faltenbalg 1 gemäß dem Stand der Technik. Der Faltenbalg 1 wird durch ein mit Falten versehenes, plissiertes Filtermedium gebildet. Durch das Vorsehen der Vielzahl von Falten 7 kann die Filtrationsfläche des Filterelements 10 vergrößert werden. An seinen beiden sich nicht in Richtung der Falten 7 erstreckenden Seitenflächen 6 ist das Filterelement 10 mit jeweils einem Kantenband 2 versehen. Ein solches Filterelement 10 kann in einen hier nicht dargestellten Rahmen 9 eingesetzt werden. Zur Reinigung eines Fluids ström dieses durch das Filtermedium.

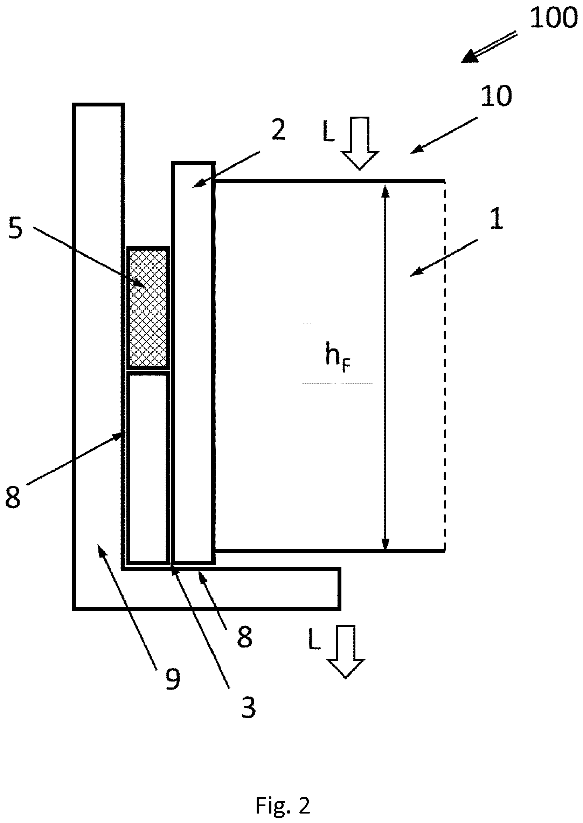

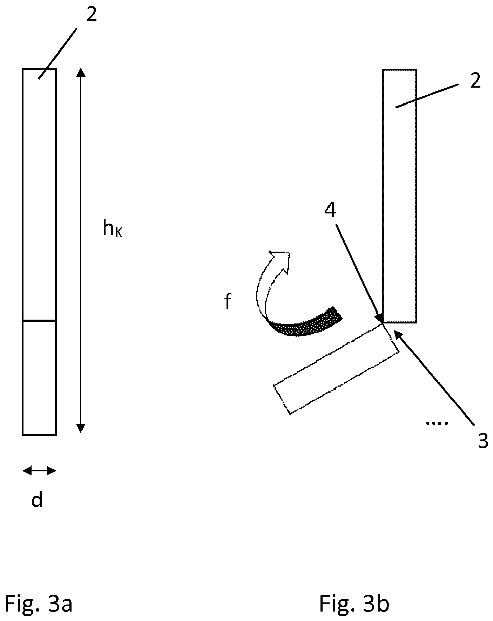

In Fig. 2 ist ein Filter 100 mit einem Filterelement 10 gemäß der Erfindung dargestellt. Der Filter 100 wird von einem Fluidstrom, z.B. einem Luftstrom L durchströmt und dabei gereinigt, wie dies durch die Pfeile angedeutet ist. Das Filterelement 10 ist in einen Rahmen 9 eingesetzt. Um eine sichere Abdichtung zwischen dem Faltenbalg 1 des Filterelements 10 und dem Rahmen 9 zu erreichen, ist der Kantenband 2 teilweise zweilagig ausgeführt. Wie zu erkennen, ergeben sich so Dichtflächen 8 zwischen Kantenband 2 und dem Rahmen 9. Der Kantenband 2 kann am Faltenbalg 1 angeklebt sein, was hier nicht näher dargestellt ist. Die Höhe des Kantenbands 2 h_{K} ist größer als die Höhe des Faltenbalgs h_{F}. Und in dem Bereich, in dem das Kantenband 2 über die Höhe des Faltenbalgs h_{F} hinausgehen würde, ist das Kantenband 2 umgefaltet bzw. nach außen umgeklappt. Durch diese umgefaltete bzw. umgeklappte Ausgestaltung des Kantenbandes 2 ergibt sich, dass das Kantenband teilweise zweilagig ausgeführt ist. Das heißt im unteren Bereich, angrenzend an die stromabwärtige Seite des Faltenbalges 1, ist zwischen Faltenbalg 1 und im Rahmen 9 das Faltenband 2 in zweifacher Dicke d angebracht. Eventuelle Fertigungstoleranzen des Rahmens 9 oder auch des Faltenbalgs 1 können so einfach ausgeglichen werden, weil das Kantenband 2 voluminös und aus einem kompressiblen Material ausgebildet ist. Die Zweilagigkeit des Kantenbands 2 wird dadurch erreicht, dass das Kantenband 2 im Bereich einer Faltkante 3 umgefaltet wird (vergl. Fig. 3a und 3b). Der gestufte Aufbau des Kantenbands 2 wird dazu genutzt, dass in den Raum zwischen Kantenband 2 und Rahmen 9 eine Dichtmasse 5 eingebracht werden kann.

In Fig. 3a ist das Kantenband 2 vor der Faltung dargestellt. Das Kantenband 2 besitzt eine Höhe h_{K} und eine Dicke d. Im Bereich einer Faltkante 3 besitzt das Kantenband 2 einen Schlitz, eine Ritze oder eine Verjüngung, sodass das Kantenband 2, wie in Fig. 3b dargestellt, einfach mit einer Faltbewegung f umgefaltet bzw. umgeklappt werden kann. Die Ausgestaltung der Faltkante 3 am Kantenband 2 ist dabei als eine Art Filmscharnier 4 ausgeführt. Als Material für das Kantenband 2 wurde hier ein komprimierbares Polyester-Stapelvlies verwendet. Das Kantenband 2 besitzt eine Dicke d von etwa ca. 2 mm bis 5 mm. Aufgrund eines geringen spezifischen Volumens ist das Kantenband 2 gut komprimierbar.

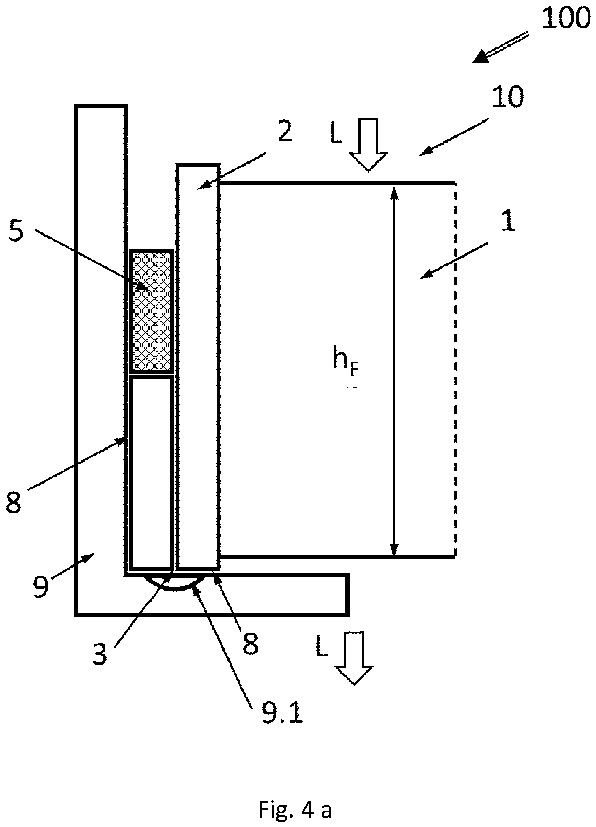

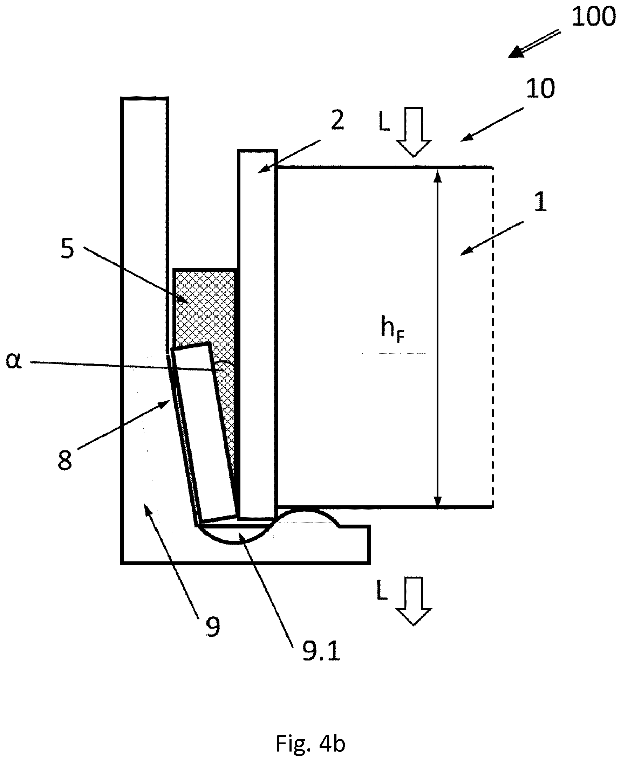

In den Figuren 4a und 4b sind Varianten des erfindungsgemäßen Filters 100 aus Figur 2 dargestellt mit einem modifizierten Rahmen 9. Gemäß beiden Varianten ist im Rahmen 9 eine Vertiefung 9.1 vorgesehen. Sollte sich bei der Fertigung des Filters 100 Dichtmasse 5 zum reingasseitigen Bereich des Rahmen 9 bewegen, z.B. im Falle der Verwendung einer anfangs flüssigen oder viskosen Dichtmasse, so wird diese durch die Vertiefung 9.1 aufgefangen.

In der Variante gemäß Figur 4b sind die Schenkel des Kantenbandes 2 so gefaltet, dass zwischen beiden ein spitzer Winkel α liegt. Das Kantenband 2 ist also so aufgefaltet, dass ein Zwischenraum entsteht, welcher ebenfalls mit einer Dichtmasse 5 befüllt werden kann. Die Dichtmasse 5 presst dann den äußeren Schenkel des Kantenbandes 2 im Bereich einer Dichtfläche 8 gegen das Gehäuse 9, wodurch eine besonders gute Abdichtung realisiert wird.

In einer weiteren, nicht dargestellten Variante ist zwar der Zwischenraum gemäß Figur 4b, nicht jedoch die Vertiefung 9.1 vorgesehen.

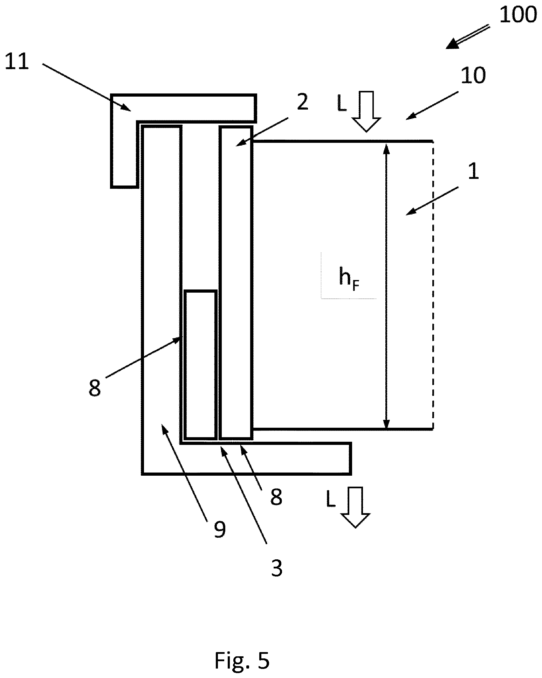

In der Variante gemäß Figur 5 der besitzt Filter 100 ein Rastelement 11, welches das Filterelement 10 mit dem Rahmen 9 formschlüssig verbindet. So wird eine einfache Montage ermöglicht, insbesondere auch für den Fall, dass das Filterelement 10 lösbar in den Rahmen 9 aufgenommen werden soll.

### Bezugszeichenliste

- 1: Faltenbalg
- 2: Kantenband
- 3: Faltkante
- 4: Filmscharnier
- 5: Dichtmasse
- 6: Seitenfläche
- 7: Falte
- 8: Dichtfläche
- 9: Rahmen
- 9.1: Vertiefung
- 10: Filterelement
- 11: Rastelement

- 100: Filter

- d: Dicke Kantenband
- h_{F}: Höhe Faltenbalg
- h_{K}: Höhe Kantenband

- f: Faltbewegung

- L: Fluidstrom, z.B. Luftstrom

- α: Winkel zwischen den Schenkeln des gefalteten Kantenbandes

## Patentansprüche

1. Filter (100) zur Filtration eines Fluidstroms (L), aufweisend einen Rahmen (9) und ein im Rahmen (9) aufgenommenes Filterelement 10), wobei das Filterelement (10) ein einen Faltenbalg (1) bildendes mit Falten (7) versehenes Filtermedium aufweist, und der Faltenbalg (1) mit mindestens einem Kantenband (2) versehen ist, **dadurch gekennzeichnet,**
**dass** das Kantenband (2) eine Höhe (h_{K}) besitzt, die größer als die Höhe (h_{F}) des Faltenbalgs (1) ist und, dass das Kantenband (2) in dem Bereich, in dem es über die Höhe (h_{F}) des Faltenbalgs (1) hinausgeht, an einer Faltkante (3) des Kantenbandes (2) umgefaltet ist und,
**dass** das Kantenband (2) aus komprimierbaren Material gefertigt ist.

2. Filter nach Anspruch 1, **dadurch gekennzeichnet, dass**
das Kantenband (2) angrenzend an die stromabwärtige Seite des Faltenbalges (1) zweilagig ausgeführt ist.

3. Filter nach Anspruch 2, **dadurch gekennzeichnet, dass** die Höhe (h_{K}) des Kantenbandes (2) geringer ist, als die doppelte Höhe (h_{F}) des Faltenbalges (1).

4. Filter nach einem der vorangehenden Ansprüche, **dadurch gekennzeichnet, dass**
das Kantenband (2) flächig am Rahmen (9) anliegt.

5. Filter nach einem der vorangehenden Ansprüche, **dadurch gekennzeichnet, dass**
das Kantenband (2) voluminös ausgeführt ist, und insbesondere mindestens 2 Millimeter dick.

6. Filter nach einem der vorangehenden Ansprüche, **dadurch gekennzeichnet, dass**
das Kantenband (2) ein spezifisches Volumen aufweist im Bereich von 0,005 m³/kg bis 0,05 m³/kg, mit dem spezifischen Volumen als Verhältnis von Dicke (d) des Kantenbandes (2) zum Flächengewicht des Kantenbandes (2).

7. Filter nach einem der vorangehenden Ansprüche, **dadurch gekennzeichnet, dass**
das Kantenband (2) an seiner Faltkante (3) geschlitzt oder geritzt oder verjüngt ist.

8. Filter nach einem der vorangehenden Ansprüche, **dadurch gekennzeichnet, dass**
das Kantenband (2) auf den Faltenbalg (1) aufgeklebt ist.

9. Filter nach einem der Ansprüche 2 bis 9, **dadurch gekennzeichnet, dass** eine Dichtmasse (5) zur Abdichtung des Filterelements (10) gegenüber dem Rahmen (9) eingebracht ist, zumindest in dem Raum zwischen dem Rahmen (9) und dem Kantenband (2).

10. Filter nach einem der vorangehenden Ansprüche, **dadurch gekennzeichnet, dass**
der Filter mind. ein Rastelement (11) besitzt, welches das Filterelement (10) mit dem Rahmen (9) formschlüssig verbindet.
